# EUROPEAN PATENT APPLICATION

(11) **EP 4 450 180 A1**
(43) Date of publication of application: **23.10.2024**
(21) Application number: 22922051.2
(22) Date of filing: 10.11.2022
(51) Int. Cl.: B21D 22/00, G06F 30/10, G06F 30/23, G06F 111/10, G06F 113/22

(54) **METHOD FOR EVALUATING ANALYSIS ACCURACY OF PRESS-FORMING ANALYSIS**

(30) Priority: 21.01.2022 JP 2022007672; 16.02.2022 JP 2022021766
(71) Applicant: JFE Steel Corporation, Tokyo 100-0011 (JP)
(72) Inventor: OGAWA, Takeshi, Tokyo 100-0011 (JP); SUMIKAWA, Satoshi, Tokyo 100-0011 (JP); YAMASAKI, Yuji, Tokyo 100-0011 (JP); SHINMIYA, Toyohisa, Tokyo 100-0011 (JP)
(74) Representative: Hoffmann Eitle
(86) International application number: PCT/JP2022/041885
(87) International publication number: WO 2023/139900

(57) **Abstract**

An analysis accuracy evaluation method of a press-forming analysis according to the present invention includes: an actual shape generation step S1 of generating an actual press-formed part shape 3 having the same shape as an actual press-formed part press-formed with a predetermined tool of press forming by utilization of an actual blank taken from a metal sheet having a shape variation; a blank model generation step S3 of generating an actual blank model 5 having the same shape as the actual blank; an analysis shape acquisition step S5 of performing a press-forming analysis with a model of a tool of press forming, which model has the same shape as the predetermined tool of press forming, by using the actual blank model 5 and acquiring an analysis press-formed part shape 7; and an evaluation step S7 of comparing the actual press-formed part shape 3 with the analysis press-formed part shape 7, obtaining a deviation amount of shape change of the both shapes, and evaluating accuracy of the press-forming analysis based on the deviation amount of shape change.

## Description

### Field

The present invention relates to an analysis accuracy evaluation method of press-forming analysis of obtaining a press-formed part shape of when press forming is performed by utilization of a blank taken from a metal sheet having a shape variation.

### Background

In progress of improvement of collision safety of an automotive body due to a stricter collision safety standard of an automobile, weight reduction of the automotive body is also required to improve fuel efficiency of the automobile in response to recent carbon dioxide emission regulations. In order to achieve both the collision safety performance and the weight reduction of the automotive body, a metal sheet having higher strength than before is being adopted in the automotive body.

Conventionally, an actual metal sheet from which a blank of obtaining a press-formed part is taken is not completely flat, but has a waveform (shape variation). Thus, the actual blank taken from the metal sheet is not necessarily flat and may have the shape variation.

In a case where such a metal sheet having the waveform is used as a blank and press-formed into an automotive part, there is a concern that the press-formed part obtained after the press forming is influenced by the shape variation and deviated from target dimensional accuracy.

A technique of selecting a press-formed part deviated from target dimensional accuracy is disclosed in Patent Literature 1 and 2, for example.

### Citation List

### Patent Literature

Patent Literature 1: Japanese Patent Application Laid-open No. 62-047504
Patent Literature 2: Japanese Patent Application Laid-open No. 2019-002834
Patent Literature 3: Japanese Patent Application Laid-open No. 2020-042566
Patent Literature 4: Japanese Patent Application Laid-open No. 2016-158699
Patent Literature 5: Japanese Patent Application Laid-open No. 2017-104880
Patent Literature 6: Japanese Patent Application Laid-open No. 2001-286938
Patent Literature 7: Japanese Patent Application Laid-open No. 2004-148381

### Summary

### Technical Problem

In a technique disclosed in Patent Literature 1 or Patent Literature 2, shapes of formed parts after press forming is compared, and a press-formed part shape of when press forming is performed with a blank having a shape variation is not analyzed and evaluated. Conventionally, with respect to a blank in a press-forming analysis, what has no description about a shape of a blank at all as in Patent Literature 3, what restricts only a shape profile of a blank as described in Patent Literature 4 or Patent Literature 5, or what restricts material properties of a blank as described in Patent Literature 6 has been known. Furthermore, as described in Patent Literature 7, a press-formed part developed into a flat blank has been disclosed. That is, in all of these conventional patents, a blank is flat, and only a press-forming analysis of obtaining a shape of a press-formed part press-formed on the assumption of a flat blank has been performed. A press-forming analysis of obtaining a press-formed part shape of when press forming is performed with a blank having a shape variation has not been performed, and analysis accuracy of such a press-forming analysis has not been evaluated. As described above, the blank to be actually press-formed is taken from the metal sheet. The metal sheet is not completely flat and has a shape variation. In the conventional press forming, when the shape variation of the blank is slight, dimensional accuracy of a press-formed part is hardly influenced. However, in a case where the shape variation of the metal sheet becomes large, even when the press-forming analysis described in Patent Literature in the related arts is performed, there is a difference from a dimension of a press-formed part obtained by actual press forming and dimensional accuracy of the press-formed part cannot be obtained accurately.

The present invention has been made to solve the above problems, and an object thereof is to provide an analysis accuracy evaluation method of a press-forming analysis of obtaining a press-formed part shape of when press forming is performed by utilization of a blank taken from a metal sheet having a shape variation.

### Solution to Problem

An analysis accuracy evaluation method of a press-forming analysis according to the present invention obtains a press-formed part shape when press forming is performed by utilization of a blank taken from a metal sheet having a shape variation, and includes: an actual shape generation step of generating, based on measurement data obtained by measurement of a shape after die release of an actual press-formed part press-formed with a predetermined tool of press forming by utilization of an actual blank taken from the metal sheet having the shape variation, an actual press-formed part shape having a same shape as the actual press-formed part; a blank model generation step of generating an actual blank model having a same shape as the actual blank based on measurement data obtained by measurement of a shape of the actual blank used for the actual press-formed part; an analysis shape acquisition step of acquiring a press-formed part shape after die release as an analysis press-formed part shape by performing, by using the actual blank model, a press-forming analysis of when press forming is performed with a model of a tool of press forming which model has a same shape as the predetermined tool of press forming; and an evaluation step of comparing the actual press-formed part shape and the analysis press-formed part shape, obtaining a deviation amount of shape change of the both shapes, and evaluating accuracy of the press-forming analysis based on the deviation amount of shape change.

In the evaluation step, a bottom dead center shape in the press-forming analysis using the actual blank model may be obtained as a reference, and a difference between a difference from the actual press-formed part shape corresponding to a predetermined position of the bottom dead center shape and a difference from the analysis press-formed part shape corresponding to the predetermined position of the bottom dead center may be acquired as the deviation amount of shape change.

In the evaluation step, a forming surface shape of the model of the tool of press forming may be obtained as a reference, and a difference between a difference from the actual press-formed part shape corresponding to a predetermined position of the forming surface shape and a difference from the analysis press-formed part shape corresponding to the predetermined position of the forming surface shape may be acquired as the deviation amount of shape change.

### Advantageous Effects of Invention

According to the present invention, it is possible to evaluate analysis accuracy with respect to a press-forming analysis which has not been performed conventionally and in which a press-formed part shape of when press forming is performed by utilization of a blank taken from a metal sheet having a shape variation is obtained. When the analysis accuracy is clarified, reliability of the press-formed part shape by the press-forming analysis can be secured. Thus, it is possible to predict an influence of the shape variation of the blank on the press-formed part shape based on the analyzed press-formed part shape.

### Brief Description of Drawings

FIG. 1 is a flowchart for describing each step of an analysis accuracy evaluation method of a press-forming analysis according to an embodiment.
FIG. 2 is an external view of a press-formed part that is an object in the embodiment.
FIG. 3 is a view illustrating a difference amount between an actual press-formed part shape and a press bottom dead center shape.
FIG. 4 is a view for describing an actual blank model.
FIG. 4(a) is a view in which unevenness of the actual blank model is expressed by a shade of color, and FIG. 4(b) is a graph of an amount of unevenness viewed from an arrow A-A in a cross section indicated by a broken line in FIG. 4(a).
FIG. 5 is a view illustrating a difference amount between an analysis press-formed part shape and a press bottom dead center shape of when the actual blank model of FIG. 4 is used.
FIG. 6 is a view illustrating a deviation amount of shape change of when the actual press-formed part shape in FIG. 3 is compared with the analysis press-formed part shape in FIG. 5.
FIG. 7 is a view illustrating a difference amount between an actual press-formed part shape and a press bottom dead center shape in an example.
FIG. 8 is a view illustrating a difference amount between an analysis press-formed part shape and the press bottom dead center shape in the example.
FIG. 9 is a view illustrating a deviation amount of shape change of when the actual press-formed part shape in FIG. 7 is compared with the analysis press-formed part shape in FIG. 8 are compared.
FIG. 10 is a view illustrating a flat blank model used in a conventional press-forming analysis.
FIG. 11 is a view illustrating a difference amount between a flat blank press-formed part shape and a press bottom dead center shape of when the flat blank model of FIG. 10 is used.
FIG. 12 is a view illustrating a deviation amount of shape change of when the actual press-formed part shape in FIG. 7 is compared with the flat blank press-formed part shape in FIG. 10.

### Description of Embodiments

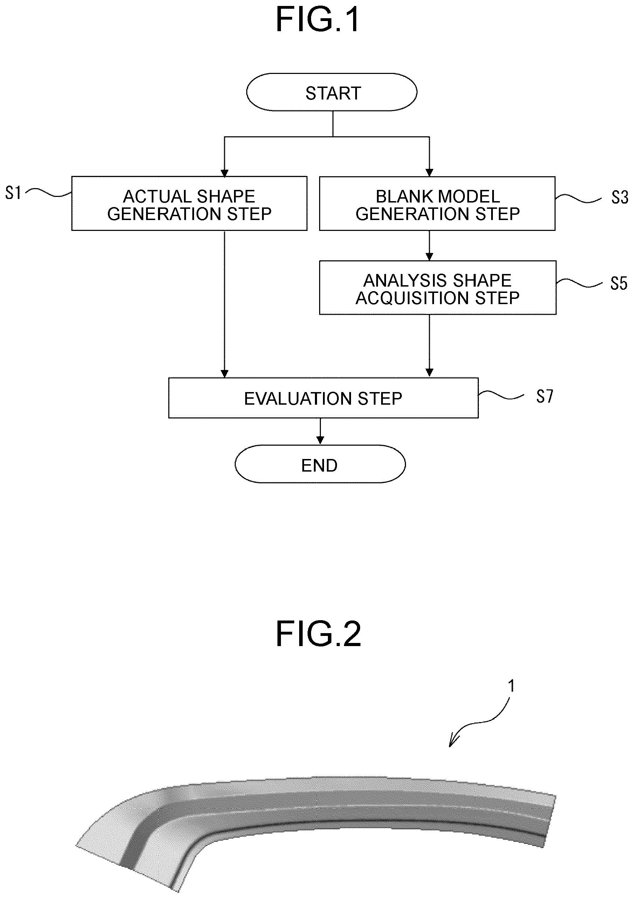

An analysis accuracy evaluation method of a press-forming analysis according to the present embodiment is a method of evaluating analysis accuracy of a press-forming analysis of obtaining a press-formed part shape of when press forming (such as crash forming or deep drawing) is performed by utilization of a blank taken from a metal sheet having a shape variation (uneven waveform). As illustrated in FIG. 1, the analysis accuracy evaluation method of the press-forming analysis according to the present embodiment includes an actual shape generation step S1 that is a generation step of an actual press-formed part shape, a blank model generation step S3 that is a generation step of an actual blank model, an analysis shape acquisition step S5 that is a shape acquisition step of analysis press-formed part, and an evaluation step S7 that is an analysis accuracy evaluation step. Hereinafter, each configuration will be described in detail with a case where press forming is performed with a press-formed part 1 illustrated in FIG. 2 as a target shape. Although a blank made of a 1.5 GPa-class steel sheet having a sheet thickness of 1.2 mm is used in the present embodiment, this is not a limitation.

### <Actual shape generation step>

The actual shape generation step S1 is a step of generating, based on an actual press-formed part press-formed by utilization of an actual blank taken from a metal sheet having a shape variation, an actual press-formed part shape having the same shape as the actual press-formed part.

In the actual shape generation step S1, for example, an actual blank is press-formed by utilization of a predetermined tool of press forming, a shape after die release of the actual press-formed part obtained by the press forming is measured by utilization of a 3D shape measuring instrument or the like by a laser rangefinder, and the actual press-formed part shape is generated based on the measured measurement data. Although the actual press-formed part may be formed by crash forming or deep drawing, the deep drawing will be described as an example in the present embodiment, and the crash forming will be described as an example in an example described later.

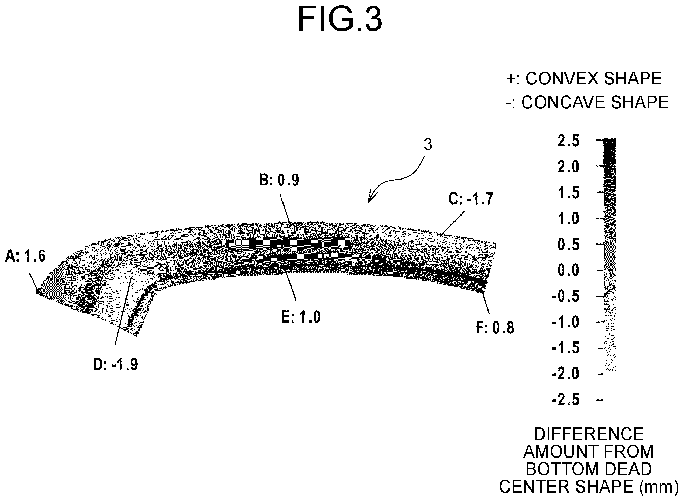

An actual press-formed part shape 3 generated in the above manner is illustrated in FIG. 3. In FIG. 3, a difference amount from a bottom dead center shape of when a press-forming analysis is performed by a model of a tool of press forming is indicated by a shade of color in addition to the actual press-formed part shape. The bottom dead center shape can be obtained by modeling of the actual blank and performance of the press-forming analysis. The model of a tool of press forming is a model obtained by modeling of the tool of press forming which tool is used for forming of an actual press-formed part, and is a model generated in such a manner as to have the same shape as a forming surface of an actual tool of press forming (not illustrated). Then, the difference amount from the bottom dead center shape is a value obtained by subtraction of a height of a corresponding portion of the bottom dead center shape from a height of each portion of the actual press-formed part shape in a press forming direction, and is a springback amount in the press forming direction. The shape becomes a convex shape compared to the bottom dead center shape in a case where the height difference (difference amount) is + (plus), and the shape becomes a concave shape compared to the bottom dead center shape in a case where the height difference (difference amount) is - (minus).

In FIG. 3, a color of a portion having the concave shape compared to the bottom dead center shape is made light, and a color of a portion having the convex shape is made dark. In addition, with respect to numbers displayed in the drawing, + is a difference amount in a convex direction, - is a difference amount in a concave direction, and a unit is mm. In the present example, as illustrated in FIG. 3, the difference amount of the actual press-formed part shape 3 was 1.6 mm at a left end of an upper flange portion (portion A in the following), 0.9 mm at a center portion in a longitudinal direction of the upper flange portion (portion B in the following), -1.7 mm near a right end of the upper flange portion (portion C in the following), -1.9 mm at a curved portion of a top portion (portion D in the following), 1.0 mm at a center portion in the longitudinal direction of a lower flange portion (portion E in the following), and 0.8 mm at a right end of the lower flange portion (portion F in the following).

The above is an example in which a series of steps including press forming of the actual press-formed part, shape measurement of the actual press-formed part, and generation of the actual press-formed part shape is performed. However, in a case where an actual press-formed part obtained by press forming is prepared in advance, a shape of the actual press-formed part may be measured and the actual press-formed part shape may be generated. In addition, in a case where data obtained by measurement of the shape of the actual press-formed part is prepared in advance, the actual press-formed part shape may be generated based on the data.

In a blank model generation step S3 (described later), since measurement data obtained by measurement of the shape of the actual blank is required, it is necessary to measure the shape of the actual blank before press forming of the actual press-formed part.

In addition, it is preferable to accumulate data such as the actual press-formed part shape 3 and the bottom dead center shape and perform a display thereof on a screen of a computer such as a personal computer (PC) since the shapes can be easily compared. The same applies to an actual blank model 5 and an analysis press-formed part shape 7 (described later).

### <Blank model generation step>

The blank model generation step S3 is a step of generating an actual blank model having the same shape as the actual blank based on the measurement data obtained by measurement of the shape of the actual blank used for the press forming of the actual press-formed part described above.

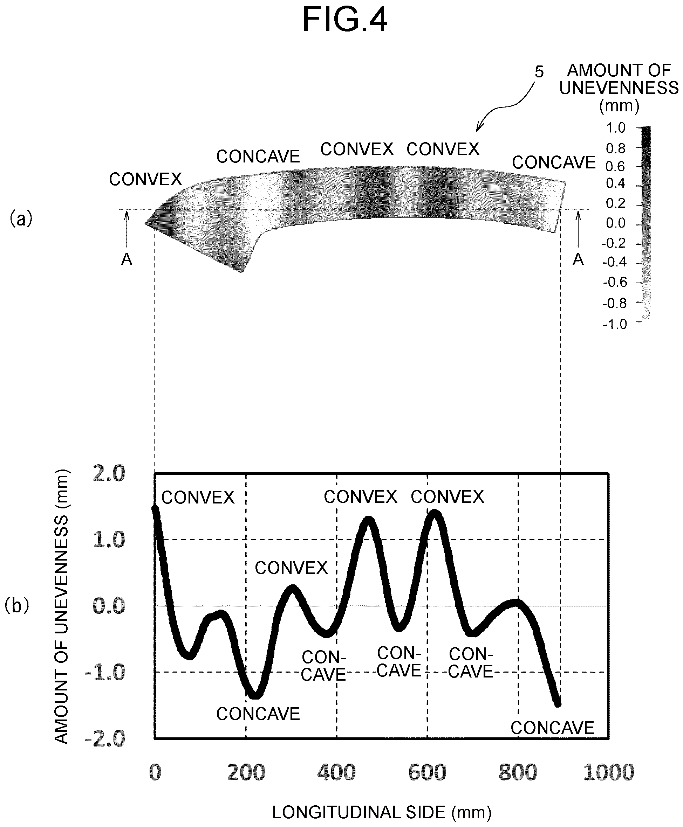

Similarly to the shape measurement of the actual press-formed part, a 3D shape measuring instrument or the like by a laser rangefinder can be used for shape measurement of the actual blank. An actual blank model generated based on shape measurement data of the actual blank is illustrated in FIG. 4(a).

The actual blank model 5 in FIG. 4(a) is a blank model having the same uneven shape as the actual blank used for the actual press-formed part, and expresses the unevenness by a shade of color. FIG. 4(b) is a graph of an amount of the unevenness of when a cross section indicated by a broken line in FIG. 4(a) is viewed from an arrow A-A, a median of the unevenness being zero. The actual blank model 5 has an irregular uneven shape having a sheet thickness of 1.2 mm and a maximum amount of unevenness of ±1.4 mm as illustrated in FIG. 4(b).

### <Analysis shape acquisition step>

The analysis shape acquisition step S5 is a step of performing, by using the actual blank model 5, a press-forming analysis of when press forming is performed with a model of a tool of press forming which model has the same shape as the tool of press forming which tool is used to form the actual press-formed part, and acquiring the press-formed part shape after die release as the analysis press-formed part shape.

In the press-forming analysis, a CAE analysis such as a finite element method (FEM) is usually performed. Since the actual press-formed part of the present embodiment is formed by deep drawing as described above, the CAE analysis performs the press-forming analysis as the deep drawing. The "press-forming analysis" in the present description includes an analysis of acquiring the shape of the bottom dead center and an analysis of acquiring the shape after the die release, that is, after springback.

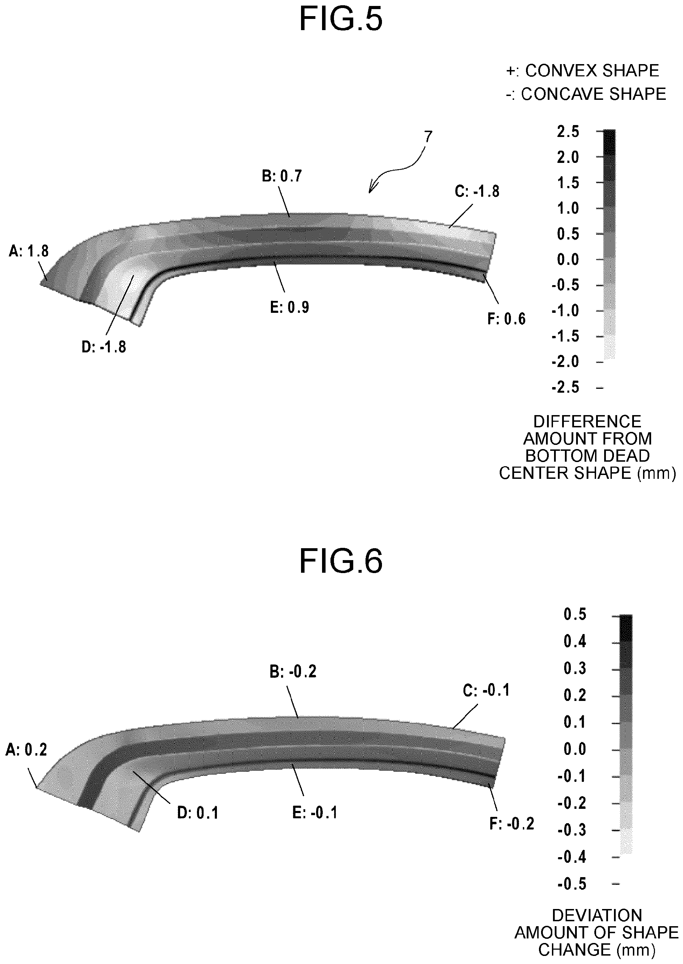

The analysis press-formed part shape 7 is illustrated in FIG. 5. The color and numerical values illustrated in FIG. 5 indicate difference amounts from the bottom dead center shape similarly to FIG. 3. As illustrated in FIG. 5, a difference amount from the bottom dead center shape in the analysis press-formed part shape 7 was 1.8 mm at the portion A, 0.7 mm at the portion B, -1.8 mm at the portion C, -1.8 mm at the portion D, 0.9 mm at the portion E, and 0.6 mm at the portion F.

### <Evaluation step>

The evaluation step S7 is a step of comparing the actual press-formed part shape 3 with the analysis press-formed part shape 7, obtaining the deviation amount of shape change of the both shapes, and evaluating accuracy of the press-forming analysis based on the deviation amount of shape change.

In the present embodiment, the difference amount (springback amount) at each portion of the actual press-formed part shape 3 (FIG. 3) and the analysis press-formed part shape 7 (FIG. 5) from the bottom dead center shape is obtained and compared, and a difference between these difference amounts is obtained as the deviation amount of shape change. That is, the deviation amount of shape change is a value obtained by subtraction of the difference amount between the actual press-formed part shape 3 generated based on the actual press-formed part and the bottom dead center shape from the difference amount between the analysis press-formed part shape 7 generated by the press-forming analysis using the actual blank model 5 and the bottom dead center shape. Thus, the portion of the analysis press-formed part shape 7 has a convex shape as compared with the actual press-formed part shape 3 in a case where the deviation amount of shape change (difference in the difference amounts) is + (plus), and the portion of the analysis press-formed part shape 7 has a concave shape as compared with the actual press-formed part shape 3 in a case where the deviation amount of shape change (difference in the difference amounts) is - (minus).

The deviation amount of shape change obtained by the comparison between the actual press-formed part shape 3 and the analysis press-formed part shape 7 is illustrated in FIG. 6. As illustrated in FIG. 6, the deviation amount of shape change of when the actual press-formed part shape 3 and the analysis press-formed part shape 7 were compared was 0.2 mm at the portion A, -0.2 mm at the portion B, -0.1 mm at the portion C, 0.1 mm at the portion D, -0.1 mm at the portion E, and -0.2 mm at the portion F.

As described above, since the deviation amount of shape change is a small value of ±0.2 mm or less at any of the portions A to F, it can be said that the analysis press-formed part shape 7 is a shape very close to that of the actual press-formed part. Thus, in the present example, it can be evaluated that the accuracy of the press-forming analysis using the actual blank model 5 is high.

According to the present embodiment, it is possible to evaluate analysis accuracy with respect to a press-forming analysis which has not been conventionally performed and in which a press-formed part shape of when press forming is performed by utilization of a blank taken from a metal sheet having a shape variation is obtained. When a level of the analysis accuracy is clarified by the analysis accuracy evaluation method of the present embodiment, reliability of the press-formed part shape by the press-forming analysis can be secured. Thus, it is possible to predict an influence of the shape variation of the blank on the press-formed part shape based on the analyzed press-formed part shape.

As the deviation amount of shape change of when the actual press-formed part shape 3 is compared with the analysis press-formed part shape 7, a difference obtained by subtraction of a height of each portion of the actual press-formed part shape 3 from a height of each portion of the analysis press-formed part shape 7 in the press forming direction may be directly applied. However, in this case, it is necessary to set a fixed point common to the respective press-formed part shapes, and the deviation amount of shape change may vary depending on how the fixed point is selected. In this regard, the comparison between the difference amounts from the bottom dead center shape as in the above embodiment is preferable since the deviation amount of shape change can be obtained based on a stable standard. In addition, it is also preferable to perform comparison between difference amounts from the forming surface shape of the model of the tool of press forming in place of the above-described press bottom dead center shape and to obtain the deviation amount of shape change thereof since the basis is on a stable standard.

### [Example]

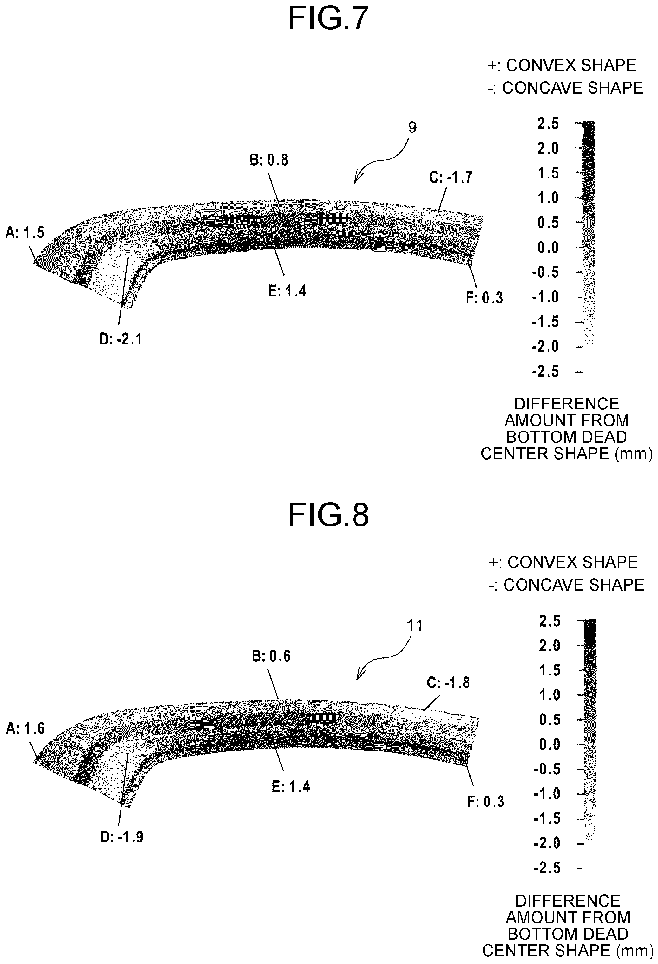

In order to confirm an effect of the present invention, the analysis accuracy evaluation method of the press-forming analysis described in the embodiment is performed with the deep drawing being changed to the crash forming, and thus, a description thereof will be made with reference to FIG. 7 to FIG. 9. In the present example, a blank made of a 1.5 GPa-class steel sheet having a sheet thickness of 1.2 mm was used. In addition, numerical values, a shade of color, convex shapes, and concave shapes illustrated in FIG. 7 to FIG. 9 have the same meanings as those described in the above embodiment.

FIG. 7 is a view illustrating an actual press-formed part shape generated based on measurement data obtained by measurement of a shape after die release of an actual press-formed part press-formed by crash forming. As illustrated in FIG. 7, a difference amount from a bottom dead center shape in an actual press-formed part shape 9 in the present example was 1.5 mm at a left end of an upper flange portion (portion A), 0.8 mm at a center portion in a longitudinal direction of the upper flange portion (portion B), -1.7 mm near a right end of the upper flange portion (portion C), -2.1 mm at a curved portion of a top portion (portion D), 1.4 mm at a center portion in the longitudinal direction of a lower flange portion (portion E), and 0.3 mm at a right end of the lower flange portion (portion F).

FIG. 8 is a view illustrating an analysis press-formed part shape of a case where an actual blank model (not illustrated) having the same shape as the actual blank having the uneven shape and used for the above-described actual press-formed part is generated and a press-forming analysis is performed by utilization of the actual blank model. As illustrated in FIG. 8, a difference amount from the bottom dead center shape in an analysis press-formed part shape 11 in the present example was 1.6 mm at the portion A, 0.6 mm at the portion B, -1.8 mm at the portion C, -1.9 mm at the portion D, 1.4 mm at the portion E, and 0.3 mm at the portion F.

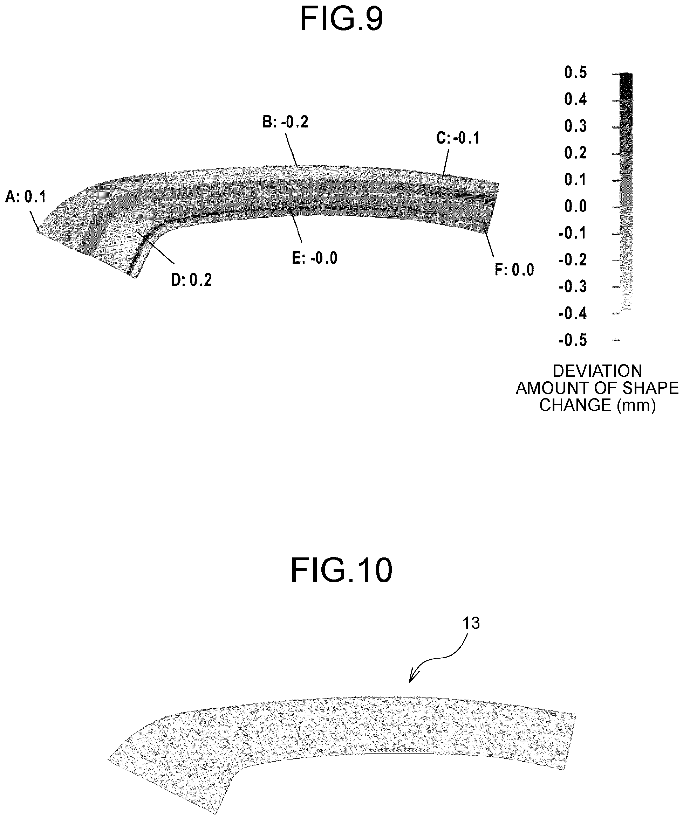

A deviation amount of shape change obtained by comparison between the actual press-formed part shape 9 and the analysis press-formed part shape 11 is illustrated in FIG. 9. As illustrated in FIG. 9, the deviation amount of shape change of when the actual press-formed part shape 9 and the analysis press-formed part shape 11 were compared in the present example was 0.1 mm at the portion A, -0.2 mm at the portion B, -0.1 mm at the portion C, 0.2 mm at the portion D, -0.0 mm at the portion E, and 0.0 mm at the portion F.

As described above, since the deviation amount of shape change is a small value of ±0.2 mm or less at any of the portions A to F, it can be said that the analysis press-formed part shape 11 is a shape very close to that of the actual press-formed part. Thus, in the present example, it can be evaluated that the accuracy of the press-forming analysis using the actual blank model is high.

As a reference example, analysis accuracy of a case of a conventional press-forming analysis will be described with reference to FIG. 10 to FIG. 12.

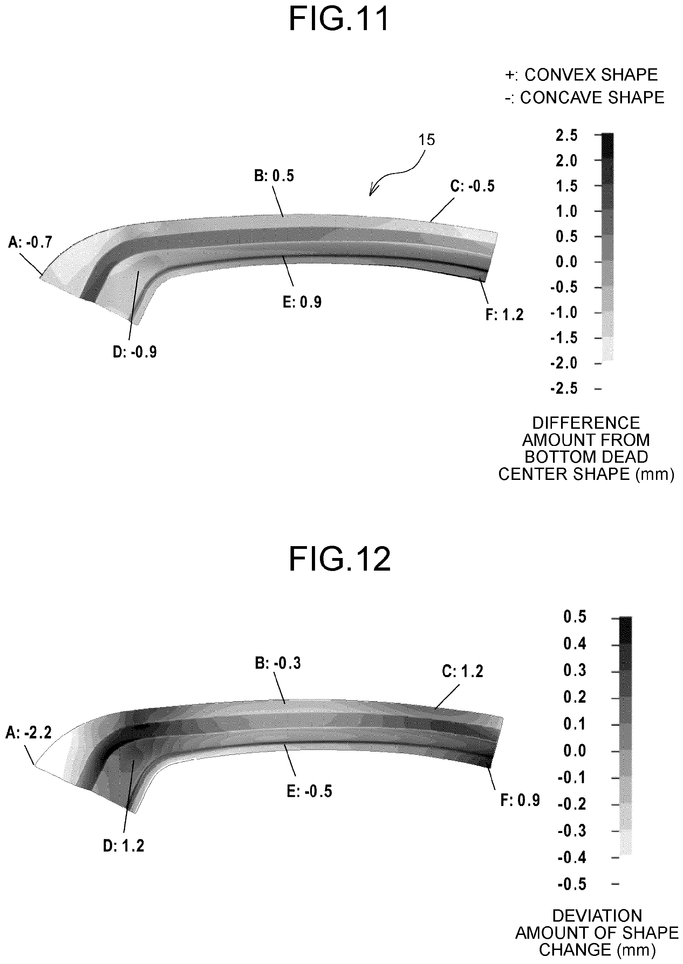

In the conventional press-forming analysis, a blank model having a flat shape without unevenness as illustrated in FIG. 10 (hereinafter, referred to as a flat blank model 13) described in Patent Literature 3 to 6 has been generally used. A flat blank press-formed part shape 15 that is a press-formed part shape after die release of a case where a press-forming analysis is performed by crash forming similarly to the example of FIG. 8 by utilization of the flat blank model 13 is illustrated in FIG. 11. As illustrated in FIG. 11, a difference amount from a bottom dead center shape in the flat blank press-formed part shape 15 was -0.7 mm at a portion A, 0.5 mm at a portion B, -0.5 mm at a portion C, -0.9 mm at a portion D, 0.9 mm at a portion E, and 1.2 mm at a portion F.

A deviation amount of shape change of a case where the actual press-formed part shape 9 (FIG. 7) is compared with the flat blank press-formed part shape 15 (FIG. 11) is illustrated in FIG. 12. As illustrated in FIG. 12, the deviation amount of shape change of when the actual press-formed part shape 9 and the flat blank press-formed part shape 15 of the reference example were compared was -2.2 mm at the portion A, -0.3 mm at the portion B, 1.2 mm at the portion C, 1.2 mm at the portion D, -0.5 mm at the portion E, and 0.9 mm at the portion F.

When the deviation amount of shape change between the analysis press-formed part shape 11 and the actual press-formed part shape 9 in the present example (see FIG. 9) and the deviation amount of shape change between the flat blank press-formed part shape 15 and the actual press-formed part shape 9 (see FIG. 12) were compared, the deviation amount of shape change between the analysis press-formed part shape 11 and the actual press-formed part shape 9 was smaller at any of the portions A to F. Thus, it has been found that the press-formed part shape having an accurate shape close to that of the actual press-formed part is acquired when the press-forming analysis is performed by utilization of the actual blank model, which is to acquire the analysis press-formed part shape, of the present invention compared to a case where the analysis is performed by utilization of the conventional flat blank model.

### Industrial Applicability

According to the present invention, it is possible to provide an analysis accuracy evaluation method of a press-forming analysis of obtaining a press-formed part shape of when press forming is performed by utilization of a blank taken from a metal sheet having a shape variation. As a result, reliability by the press-forming analysis can be secured, and an influence of the shape variation of the blank on the press-formed part shape can be predicted.

### Reference Signs List

1 PRESS-FORMED PART (TARGET SHAPE)
3 ACTUAL PRESS-FORMED PART SHAPE (DEEP DRAWING)
5 ACTUAL BLANK MODEL
7 ANALYSIS PRESS-FORMED PART SHAPE (DEEP DRAWING)
9 ACTUAL PRESS-FORMED PART SHAPE (CRASH FORMING)
11 ANALYSIS PRESS-FORMED PART SHAPE (CRASH FORMING)
13 FLAT BLANK MODEL
15 FLAT BLANK PRESS-FORMED PART SHAPE (CRASH FORMING)

## Claims

1. An analysis accuracy evaluation method of a press-forming analysis for obtaining a press-formed part shape when press forming is performed by utilization of a blank taken from a metal sheet having a shape variation, the analysis accuracy evaluation method comprising:
an actual shape generation step of generating, based on measurement data obtained by measurement of a shape after die release of an actual press-formed part press-formed with a predetermined tool of press forming by utilization of an actual blank taken from the metal sheet having the shape variation, an actual press-formed part shape having a same shape as the actual press-formed part;
a blank model generation step of generating an actual blank model having a same shape as the actual blank based on measurement data obtained by measurement of a shape of the actual blank used for the actual press-formed part;
an analysis shape acquisition step of acquiring a press-formed part shape after die release as an analysis press-formed part shape by performing, by using the actual blank model, a press-forming analysis of when press forming is performed with a model of a tool of press forming which model has a same shape as the predetermined tool of press forming; and
an evaluation step of comparing the actual press-formed part shape and the analysis press-formed part shape, obtaining a deviation amount of shape change of the both shapes, and evaluating accuracy of the press-forming analysis based on the deviation amount of shape change.

2. The analysis accuracy evaluation method of a press-forming analysis according to claim 1, wherein in the evaluation step, a bottom dead center shape in the press-forming analysis using the actual blank model is obtained as a reference, and a difference between a difference from the actual press-formed part shape corresponding to a predetermined position of the bottom dead center shape and a difference from the analysis press-formed part shape corresponding to the predetermined position of the bottom dead center is acquired as the deviation amount of shape change.

3. The analysis accuracy evaluation method of a press-forming analysis according to claim 1, wherein in the evaluation step, a forming surface shape of the model of the tool of press forming is obtained as a reference, and a difference between a difference from the actual press-formed part shape corresponding to a predetermined position of the forming surface shape and a difference from the analysis press-formed part shape corresponding to the predetermined position of the forming surface shape is acquired as the deviation amount of shape change.
